# EUROPÄISCHE PATENTSCHRIFT

(11) **EP 3 029 195 B1**
(45) Veröffentlichungstag und Bekanntmachung des Hinweises auf die Patenterteilung: **27.04.2022**
(21) Anmeldenummer: 15003276.1
(22) Anmeldetag: 18.11.2015
(51) Int. Cl.: D06F 67/04, D06F 95/00

(54) **VERFAHREN UND VORRICHTUNG ZUM ZUFÜHREN VON WÄSCHESTÜCKEN ZU EINER MANGEL ODER EINER SONSTIGEN WÄSCHEBEHANDLUNGSEINRICHTUNG**
METHOD AND DEVICE FOR FEEDING LAUNDRY ITEMS TO A MANGLE OR ANOTHER LAUNDRY TREATMENT DEVICE
PROCEDE ET DISPOSITIF DE GUIDAGE DE VETEMENTS DANS UN CYLINDRE OU UN AUTRE DISPOSITIF DE TRAITEMENT DU LINGE

(30) Priorität: 26.11.2014 DE 102014017477
(43) Veröffentlichungstag der Anmeldung: 08.06.2016
(60) Teilanmeldung: 22156067.5
(73) Patentinhaber: Herbert Kannegiesser GmbH, 32602 Vlotho (DE)
(72) Erfinder: Sielermann, Jürgen, 73540 Heubach (DE); Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A1- 2 930 264
- EP-A2- 0 372 320
- EP-A2- 2 113 606
- EP-A2- 2 444 544
- DE-A1- 19 504 948
- DE-A1-102008 028 120
- JP-B2- 5 396 155

## Beschreibung

Die Erfindung betrifft ein Verfahren zum Zuführen von Wäschestücken zu einer Mangel oder einer sonstigen Wäschebehandlungseinrichtung gemäß dem Oberbegriff des Anspruchs 1.

Wäschestücke werden nach dem Waschen und Trocken als sogenannte Trockenwäsche in einer Mangel gemangelt und dabei von ihrer Restfeuchte befreit oder sogleich in einer Falteinrichtung gefaltet. Die Wäschestücke müssen im ausgebreiteten Zustand der Mangel, Falteinrichtung oder einer sonstigen Wäschebehandlungseinrichtung zugeführt werden. Das erfolgt maschinell durch Eingabemaschinen. Diese weisen einen Zuführförderer auf, der das darauf ausgebreitet liegende Wäschestück in die Mangel oder eine sonstige Wäschebehandlungseinrichtung eingibt.

Die Wäschestücke werden einzeln der Eingabemaschine zugeführt, beispielweise durch Auflegen auf den Zuführförderer oder Einhängen in Spreizklammern, die das Wäschestück vor dem Zuführförderer ausbreiten und auf demselben ablegen. Das Einhängen der einzelnen Wäschestücke in die Klammern der Eingabemaschine, aber auch das direkte Auflegen jedes einzelnen Wäschestücks auf den Zuführförderer erfolgen bislang manuell. Das ist zeit- und personalaufwendig. Es sind zwar schon Ansätze zur Automatisierung dieser Tätigkeiten gemacht worden, wie beispielsweise in JP 5 396155 B2 beschrieben, diese sind meist daran gescheitert, dass es schwierig ist, automatisch benachbarte Ecken einer vorderen Kante von Wäschestücken mit vertretbarem maschinellen Aufwand zuverlässig zu finden und zu ergreifen.

Der Erfindung liegt daher die Aufgabe zugrunde, ein Verfahren zu schaffen, durch das auf einfache und zuverlässige Weise Wäschestücke automatisch einer Mangel, Faltmaschine oder einer sonstigen Wäschebehandlungseinrichtung zugeführt werden.

Ein Verfahren zur Lösung der eingangs genannten Aufgabe weist die Maßnahmen des Anspruchs 1 auf. Danach ist es vorgesehen, ein Oberflächenprofil des jeweils zuzuführenden Wäschestücks oder mehrerer Wäschestücke eines Haufens aufzunehmen. Aufgrund dieses vorzugsweise dreidimensionalen Oberflächenprofils lässt sich insbesondere durch Bildauswertung eine gewünschte oder leicht zu ergreifende Stelle des jeweils der Wäschebehandlungseinrichtung zuzuführenden Wäschestücks ermitteln bzw. aussuchen und/oder die Position dieser Stelle bestimmen. Das Wäschestück kann dann automatisch an dieser Stelle zuverlässig ergriffen werden. Dabei wird das Oberflächenprofil des Wäschestücks oder der Wäschestücke durch bildgebende Maßnahmen ermittelt. Das Wäschestück wird an einer beliebigen Stelle ergriffen, die gemäß dem ermittelten Oberflächenprofil den größten Krümmungsradius aufweist.

Bevorzugt ist es vorgesehen, durch die bildgebenden Maßnahmen oder Einrichtungen ein mehrdimensionales, gegebenenfalls dreidimensionales, Bild erzeugt wird. Durch eine entsprechende, bevorzugt elektronische, Bildauswertung kann die gewünschte Stelle oder die am einfachsten zu ergreifende Stelle des Wäschestücks bestimmt werden, beispielsweise die Koordinaten derselben, die dann gezielt durch ein entsprechendes Aufnahme- oder Erfassungsmittel, beispielsweise eine Klammer, einen Greifer oder einen Sauger, anfahrbar sind, die daraufhin das Wäschestück an der gewünschten oder als bevorzugt ermittelten Stelle erfassen. Es ist so automatisch die vorgesehene oder günstigste Stelle zum Erfassen des jeweiligen Wäschestücks ermittelbar und es kann danach automatisch auch diese Stelle von einem entsprechenden Mittel angefahren und automatisch erfasst werden. Dadurch entfallen die bisher manuell erfolgten Tätigkeiten zum Zuführen von Wäschestücken zu einer Wäschebehandlungseinrichtung.

Bevorzugt wird das Oberflächenprofil jedes Wäschestücks oder auch mehrerer im Haufen liegender oder zusammenhängender Wäschestücke durch dreidimensionale bildgebende Maßnahmen, beispielsweise durch mindestens eine 3D-Kamera oder einen Laserscanner, ermittelt. Dadurch entsteht ein dreidimensionales Bild des jeweiligen Wäschestücks. Durch eine Bildauswertung, insbesondere auf elektronischem und/oder rechnerischen Weg, können sie so die Koordinaten der gesuchten Stelle, vorzugsweise einer Ecke, oder die besonders begünstigste Stelle zum Ergreifen des Wäschestücks ermittelt werden. Durch gezieltes Anfahren dieser so ermittelten Stelle oder Ecke kann vom entsprechenden Aufnahme- oder Erfassungsmittel das Wäschestück dort zuverlässig erfasst werden, wo es am günstigsten zu greifen ist und/oder gegriffen werden soll.

Falls eine beliebige Stelle des Wäschestücks ergriffen werden soll, wird so vorgegangen, dass anhand eines ermittelten dreidimensionalen Oberflächenprofils, das eine Art Topografie darstellt, die Stelle mit dem größten Krümmungsgradienten ergriffen wird. An dieser Stelle steht quasi ein Teil des unregelmäßig liegenden oder sonst wie orientierten Wäschestücks vor oder ragt aus einem Haufen mehrerer Wäschestücke heraus. An dieser Stelle kann das Wäschestück dann zuverlässig und vollautomatisch maschinell aufgenommen werden.

Weiterhin ist es bevorzugt, das Wäschestück an einer solchen Ecke zu ergreifen, die aufgrund der Auswertung des ermittelten, vorzugsweise dreidimensionalen, Oberflächenprofils für einen Greifer oder ein sonstiges Erfassungsmittel am besten zugänglich ist. Es wird so durch die Ermittlung des Oberflächenprofils nicht nur mindestens eine Ecke des Wäschestücks ermittelt, sondern auch festgestellt, welche Ecke sich am besten erfassen lässt.

Eine bevorzugte Ausgestaltungs- oder Weiterbildungsmöglichkeit des Verfahrens sieht es vor, alternativ oder zusätzlich das Oberflächenprofil eines an einer beliebigen Stelle an einem Haltemittel der Vorrichtung hängenden Wäschestücks zu ermitteln und anhand dieses Oberflächenprofils das Wäschestück an einer anderen freien Ecke gezielt zu ergreifen, beispielsweise durch ein anderes Haltemittel. Es kommt so zum automatischen Ergreifen zweier Stellen, und zwar gegebenenfalls auch zweier Ecken des Wäschestücke.

Es ist auch denkbar, anhand des aufgenommenen Oberflächenprofils eines an einer Ecke an einem Haltemittel hängenden Wäschestücks die zu dieser Ecke benachbarte Ecke des Wäschestücks ausfindig zu machen und diese gezielt zu ergreifen, wodurch auf einfachste Weise ein automatisches Erfassen eines Wäschestücks an benachbarten Ecken einer Kante möglich ist, wobei es sich bevorzugt um die vorauseilende vordere Kante handelt, womit das Wäschestück der Wäschebehandlungseinrichtung zugeführt wird.

Eine bevorzugte Ausgestaltungsmöglichkeit des Verfahrens sieht es vor, anhand des ermittelten Oberflächenprofils bzw. der Topografie des Wäschestücks die Orientierung des Saums desselben zu ermitteln. So kann festgestellt werden, auf welcher Seite des Wäschestücks sich ein bei der Saumbildung umgeschlagener schmaler Randstreifen des Wäschestücks befindet. Aufgrund der durch die Auswertung des ermittelten Oberflächenprofils bekannten Lage des Saums wird es ermöglicht, das Wäschestück in einer solchen Ausrichtung der Wäschebehandlungseinrichtung zuzuführen, insbesondere auf einem Zuführförderer abzulegen, dass der Saum gezielt oben oder unten liegt und dadurch die gewünschte Lage oder Orientierung aufweist. Diese Ausrichtung des Saums erfolgte bei der manuellen Beschickung der Wäschebehandlungseinrichtung bzw. Eingabemaschine durch die Bedienungsperson. Das konnte zu fehlerhaften Eingaben führen. Durch die erfindungsgemäße Automatisierung sind solche Fehleingaben nicht mehr möglich.

Eine bevorzugte Weiterbildung des Verfahrens kann es vorsehen, bei an einer Ecke gehaltenem Wäschestück die tiefste Stelle des von der gehaltenen Ecke herunterhängenden Wäschestücks zu ergreifen und das Wäschestück dann durch Auseinanderbewegen dieser Ecken zu strecken, insbesondere nur leicht zu strecken. Dadurch bilden sich die übrigen Ecken des Wäschestücks so aus, dass sie eine greiffähige und/oder eine zur Bilderfassung geeignete Position einnehmen. Dann kann das Wäschestück automatisch auch an einer solchen sich ausbildenden Ecke ergriffen werden, wonach das Wäschestück dann an gezielten Ecken, vorzugsweise benachbarten Ecken einer vorderen Kante, gehalten wird.

Es kann vorteilhaft sein, das Verfahren so auszugestalten, dass das an diagonal gegenüberliegenden Ecken gehaltene Wäschestück gestreckt wird. Dabei bilden sich dann zwei freie Ecken aus, die zu jeder der gehaltenen Ecken benachbart sind. Auf diese Weise können einfach automatisch benachbarte Ecken des Wäschestücks ermittelt und anschließend gezielt maschinell ergriffen werden.

Eine andere Möglichkeit der vorteilhaften Weiterbildung des Verfahrens sieht es vor, die Positionen der sich beim Strecken des Wäschestücks an vorzugsweise diagonal gegenüberliegenden Ecken ausbildenden freien Ecken bei der Ermittlung des Oberflächenprofils des Wäschestücks durch vorzugsweise ein bildgebendes Verfahren automatisch zu ermitteln. Auf diese Weise lassen sich durch Auswertung des aufgenommenen Bilds des Wäschestücks rechnerisch die Positionen der beim Strecken sich ausbildenden freien Ecken ermitteln, und zwar gegebenenfalls auch dreidimensional, wodurch sich die Positionen der beim Strecken des Wäschestücks sich ausbildenden freien Enden im Raum, insbesondere ihre Koordinaten, ergeben. Daraus kann auch festgestellt werden, welche der freien Ecken, die benachbart zu einer bestimmten gehaltenen Ecke des Wäschestücks ist, eine kurze oder eine lange Kante des Wäschestücks begrenzt. Es kann dann das Wäschestück automatisch so ergriffen werden, wie es an die nachfolgende Wäschebehandlungseinrichtung, beispielsweise im Zuführförderer einer Eingabeeinrichtung vor einer Mangel, übergeben werden soll.

Bevorzugte Ausführungsbeispiele der Erfindung werden nachfolgend anhand der Zeichnung näher erläutert. In dieser zeigen:
- Fig. 1: eine schematische Darstellung der Zuführung von Wäschestücken zu einer Wäschebehandlungseinrichtung,
- Fig. 2: eine schematische Darstellung analog zur Fig. 1 eines zweiten Ausführung-sbeispiels der Erfindung, und
- Fig. 3: eine schematische Darstellung analog zu den Fig. 1 und 2 eines dritten Aus-führungsbeispiels der Erfindung.

Die Figuren zeigen schematisch unterschiedliche Vorgehensweisen für das automatische Zuführen von Wäschestücken zu einer Wäschebehandlungseinrichtung. Für die nachfolgende Beschreibung wird davon ausgegangen, dass es sich bei der nicht gezeigten Wäschebehandlungseinrichtung um eine Eingabemaschine zum Zuführen von vorzugsweise ausgebreiteten Wäschestücken zu einer Mangel handelt. Die Erfindung ist hierauf aber nicht beschränkt.

Ein einzelnes, gewaschenes und zumindest teilweise getrocknetes unausgebreitetes, beliebig orientiertes, zum Beispiel zusammengeknülltes Wäschestück 10 oder auch ein Haufen gewaschener und mindestens teilweise getrockneter Wäschestücke 10 wird mittels eines schematisch dargestellten Förderers 11 oder auch eines anderen Transportmittels zu einer Aufnahmestelle 12 transportiert. Von dieser Aufnahmestelle 12 wird jeweils ein einzelnes Wäschestück 10 ohne irgendwelche manuelle Hilfestellung vollautomatisch der nicht gezeigten Eingabemaschine zugeführt, und zwar vorzugsweise mit mindestens teilweise ausgebreiteter vorderer Kante 13 auf einem Zuführförderer der Eingabemaschine abgelegt oder an Klammern, insbesondere Spreizklammern, der Eingabemaschine übergeben.

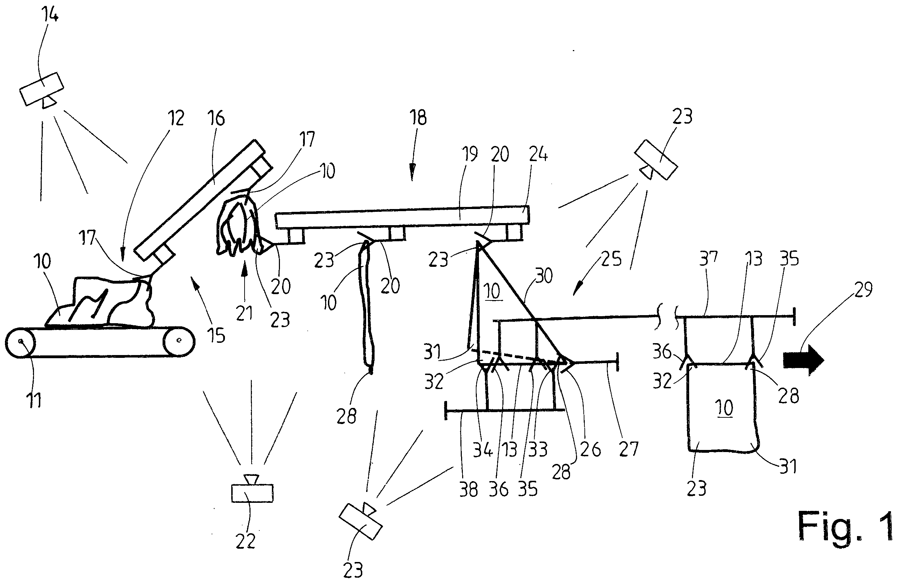

In der Fig. 1 ist ein einzelnes in beliebiger Orientierung auf dem Förderer 11 der Aufnahmestelle 12 sich befindendes Wäschestück 10 gezeigt. An der Aufnahmestelle 12 wird von dem eine unregelmäßige Orientierung aufweisenden Wäschestück 10 mittels mindestens einer gezeigten Kamera 14 ein Bild erzeugt. Es handelt sich hierbei vorzugsweise um ein dreidimensionales Bild. Dieses Bild des Oberflächenprofils stellt mindestens einen Teil einer Topografie des Wäschestücks 10 dar. In der Fig. 1 ist im Bereich der Aufnahmestelle 12 symbolisch nur eine einzelne Kamera 14 dargestellt. Hierbei kann es sich um eine 3D-Kamera oder einen Laserscanner handeln. Es ist aber auch denkbar, mehrere Kameras 14 an der Aufnahmestelle 12 vorzusehen, die zweckmäßigerweise an unterschiedlichen Stellen rings um das Wäschestück 10 an der Aufnahmestelle 12 verteilt angeordnet sind.

Der Aufnahmestelle 12 ist eine Greifeinrichtung 15 zugeordnet, die im gezeigten Ausführungsbeispiel eine schräg ansteigende Schiene 16 mit zwei daran geradlinig aufwärts verfahrbaren Klammern 17 aufweist. Die Klammern 17 ergreifen abwechselnd ein Wäschestück 10 an der Aufnahmestelle 12. Während die eine Klammer 17 ein Wäschestück 10 an der Aufnahmestelle 12 übernimmt, kann die andere Klammer 17 an einem gegenüberliegenden, höheren Endbereich der Schiene 16 ein zuvor ergriffenes Wäschestück 10 an einen anderen Förderer übergeben. Es ist aber auch denkbar, dass die Greifeinrichtung 15 nur eine einzige Klammer 17 oder ein sonstiges Erfassungsmittel, beispielsweise einen Sauger, aufweist. Die Greifeinrichtung 15 kann auch aus einem langhubigen Zylinder gebildet sein. Dann verfügt die Greifeinrichtung 15 nur über eine einzige Klammer 17.

An die Greifeinrichtung 15 schließt eine Transporteinrichtung 18 an. Die hier gezeigte Transporteinrichtung 18 verfügt über eine geradlinige Schiene 19, die im gezeigten Ausführungsbeispiel etwa horizontal verläuft. An der Schiene 19 sind geradlinig mehrere, vorzugsweise gleiche Klammern 20 verfahrbar. Ein oberer Endbereich der Schiene 16 der Greifeinrichtung 15 und ein zur Schiene 16 weisender Endbereich der Schiene 19 befinden sich an einer Übergabestelle 21 so dicht beieinander, dass ein von der Klammer 17 gehaltenes Wäschestück 10 im oberen Endbereich der Schiene 16 von einer Klammer 20 im zur Greifeinrichtung 15 weisenden Endbereich der Schiene 19 der Transporteinrichtung 18 übernommen werden kann.

Der Übergabestelle 21 zwischen benachbarten Endbereichen der Schienen 16 und 19 ist auch mindestens eine Kamera 22 zugeordnet. In der Fig. 1 ist zum Zwecke der einfacheren Darstellung nur eine einzige Kamera 22 gezeigt, obgleich auch an verschiedenen Stellen mehrere, vorzugsweise gleiche Kameras 22 vorgesehen sein können. Mit der mindestens einen Kamera 22 ist ein Bild, vorzugsweise ein dreidimensionales Bild, des Wäschestücks 10 an der Übergabestelle 21 erzeugbar. Dieses Bild gibt das Oberflächenprofil bzw. die Topografie mindestens eines Teils des Wäschestücks 10 im Bereich der Übergabestelle 21 wieder. Dementsprechend kann die sich jeweils an der Übergabestelle 21 befindende Klammer 20 der Transporteinrichtung 18 eine beliebige Ecke 23 des Wäschestücks 10 ergreifen.

Das der Greifeinrichtung 15 gegenüberliegende (in der Fig. 1 rechte) Ende 24 der Schiene 19 der Transporteinrichtung 18 befindet sich an einer Umorientierungsstelle 25. An dieser Umorientierungsstelle 25 hängt das von der Klammer 20 an der Ecke 23 gehaltene Wäschestück 10 zunächst frei herunter. Das Oberflächenprofil bzw. die Topografie des an der Umorientierungsstelle 25 von der Klammer 20 herunterhängendes Wäschestücks 10 wird wiederum durch mindestens eine Kamera 22 zur Erzeugung vorzugsweise eines dreidimensionalen Bildes ermittelt. Im gezeigten Ausführungsbeispiel sind zwei gegenüberliegende, vorzugsweise gleiche Kameras 22 gezeigt, die das Oberflächenprofil bzw. die Topografie des Wäschestücks 10 von gegenüberliegenden Seiten des Wäschestücks 10, vorzugsweise einer Außenseite und einer Innenseite, aufnehmen.

An der Umorientierungsstelle 25 ist eine Streckklammer 26 vorgesehen, die verfahrbar ist, vorzugsweise auf einer linearen Bahn 27. Beispielsweise kann dazu die Streckklammer 26 an einer schnellen Servoachse befestigt sein, die im einfachsten Falle durch einen Pneumatikzylinder gebildet ist. Die Streckklammer 26 erfasst eine Ecke 28 an der tiefsten Stelle des von der Klammer 20 herunterhängenden Wäschestücks 10. Diese untere Ecke 28 liegt der von der Klammer 20 gehaltenen oberen Ecke diagonal gegenüber.

Durch ein Verfahren der Strecklammer 26 in Zuführrichtung 29 zur nicht gezeigten Eingabemaschine wird bei stillstehender Klammer 20 das Wäschestück 10 zumindest etwas oder teilweise gestreckt, wodurch sich zwischen den diagonal gegenüberliegenden Ecken 23 und 28 eine Diagonalfalte 30 bildet. Dabei bilden sich die übrigen Ecken 31, 32 des Wäschestücks 10 aus, so dass das von den Kameras 23 aufgenommene Bild, das dem dreidimensionalem Oberflächenprofil des Wäschestücks 10 entspricht, zuverlässig die Ecken 31 und 32 detektieren bzw. erkennen lassen.

An der Umorientierungsstelle 25 ist unterhalb des Wäschestücks ein Klammerpaar aus zusammen- und auseinanderfahrbaren Klammern 33, 34 vorgesehen. Die Klammern 33, 34 sind durch geeignete Linearantriebe zusammen- und auseinanderfahrbar. Die Klammern 33 und 34 werden so weit verfahren und dadurch auf einen Abstand eingestellt, dass sie die noch von der Klammer 26 gehaltene Ecke 28 und eine der beim Strecken des Wäschestücks 10 frei gewordene Ecke 32 erfassen können. Die Klammern 33, 34 des Klammerpaars halten dann zwei benachbarte Ecken 28 und 32 einer Kante des Wäschestücks, bei der es sich eventuell schon um die vordere Kante 13 handeln kann.

Im gezeigten Ausführungsbeispiel ist über dem Klammerpaar mit den Klammern 33, 34 ein zweites Klammerpaar mit den Klammern 35, 36 vorgesehen. Die Klammern 35, 36 sind auch unabhängig voneinander zusammen- und auseinanderfahrbar, aber auch mit gleichem Abstand zusammen längs einer vorzugsweise geradlinigen Förderstrecke 37 in Zuführrichtung 29 verfahrbar. Die Klammern 35, 36 übernehmen das Wäschestück 10 von den Klammern 33, 34, und zwar auch an den Ecken 28 und 32. Das Wäschestück 10 ist dann ausgebreitet bzw. teilweise ausgebreitet, also vorausgebreitet, an gegenüberliegenden Ecken 28 und 32 der vorderen Kante 13 gehalten. Das Wäschestück 10 hängt dabei von den Klammern 35 und 36 herunter und kann längs der Förderstrecke 37 zur nicht gezeigten Eingabemaschine transportiert werden.

Es ist denkbar, das Klammerpaar mit den Klammern 35, 36 oder das Klammerpaar mit den Klammern 33, 34 entfallen zu lassen. Dann findet an der Umorientierungsstelle 25 keine Übergabe von einem Klammerpaar zum anderen statt. Vielmehr wird dann von dem Klammerpaar mit den Klammern 33, 34 oder 35, 36 das an den Ecken 28 und 32 gehaltene Wäschestück 10 direkt in Zuführrichtung 29 zur Eingabemaschine transportiert.

Das erfindungsgemäße Verfahren läuft mit der zuvor beschriebenen Vorrichtung gemäß der Fig. 1 wie folgt ab:
Vom Förderer 11 wird entweder ein einzelnes Wäschestück 10 oder ein Haufen mehrerer Wäschestücke 10 zur Aufnahmestelle 12 transportiert. Mehrere Wäschestücke 10 werden dabei an der Aufnahmestelle 12 sogleich separiert bzw. vereinzelt. Auch wenn nur ein einzelnes Wäschestück 10 zur Aufnahmestelle 12 transportiert wird, ist dieses ungeordnet, insbesondere zusammengeknüllt. Deswegen wird von mindestens einer Kamera 14 an der Aufnahmestelle 12 vorzugsweise ein dreidimensionales Bild vom Oberflächenprofil bzw. der Topografie des Wäschestücks 10 aufgenommen. Es wird dadurch die Struktur bzw. die Topografie des auf dem Förderer 11 liegenden Wäschestücks 10 dreidimensional abgebildet. Bevorzugt wird das dreidimensionale Bild des mindestens einen Wäschestücks 10 an der Aufnahmestelle 12 von einer Bildverarbeitung elektronisch aufbereitet und ausgewertet. Vor allem wird ermittelt, an welcher Stelle das Wäschestück 10 auf dem Förderer 11 am besten greifbar ist. Dazu wird vorzugsweise die Stelle des größten Krümmungsgradienten des Wäschestücks 10 an der Aufnahmestelle 12 elektronisch bzw. rechnerisch ermittelt und es werden die Koordinaten dieser Stelle bestimmt. Dementsprechend wird die Klammer 17 der Greifeinrichtung 15 an die besonders günstig zu greifende Stelle gezielt herangefahren und hier das Wäschestück 10 ergriffen.

Das dreidimensionale Bild bzw. Oberflächenmodell des Wäschestücks 10, das von der mindestens einen Kamera 14 aufgenommen wird, erstreckt sich in drei Dimensionen bzw. Raumrichtungen, nämlich in eine X-, eine Y- und eine Z-Richtung bzw. Achse. Dadurch ist jede Form des eine zufällige Lage einnehmenden Wäschestücks 10 erfassbar. Insbesondere lassen sich so Höhe und Tiefen des Wäschestücks ermitteln, die Rückschlüsse auf das Oberflächenprofil, insbesondere die Topografie, des Wäschestücks 10 zulassen.

Von der mindestens einen Kamera wird ein stereoskopisches dreidimensionales Bild der Topografie bzw. des Oberflächenprofils des Wäschestücks 10 erhalten. Das gilt insbesondere, wenn von mehreren Kameras 14 aus verschiedenen Blickwinkeln das Wäschestück 10 betrachtet wird. Durch diese spezielle Abbildung des Wäschestücks 10 mit zwei Kameras 14 oder mehr als zwei Kameras 14 aus verschiedenen Blickwinkeln lässt sich ein dreidimensionales, räumliches Bild und/oder Oberflächenmodell erstellen, indem zu jedem Punkt auf der Oberfläche des Wäschestücks 10 dreidimensionale Koordinaten zugeordnet werden. Dies kann durch eine Bildverarbeitung oder Bildweiterverarbeitung geschehen, beispielsweise mittels eines Computers.

Es reicht aus, wenn die mindestens eine Kamera 14 ein Bild des Wäschestücks 10 bzw. des Haufens mehrerer Wäschestücke 10 aufnimmt und dieses ausgewertet wird. Denkbar ist es aber auch, kontinuierlich Bilder aufzunehmen oder in regelmäßigen Zeitabständen ein Bild aufzunehmen und diese ggf. zu vergleichen.

Nachdem durch die elektrische und/oder rechnerische Bildauswertung der Topografie bzw. des Oberflächenprofils des Wäschestücks 10 mehrerer, vorzugsweise aller, sichtbaren Wäschestücke 10 des Wäschehaufens erfolgt ist, lässt sich mindestens eine Stelle ermitteln, die für das Erfassen bzw. Vereinzeln des Wäschestücks 10 besonders geeignet ist. Bei einer solchen Stelle handelt es sich bevorzugt um einen Bereich, wo das Wäschestück 10 eine große Krümmung oder einen großen Krümmungsgradienten aufweist. Beispielsweise kann es sich dabei um eine Falte, einen Knick, eine Kante oder eine Ecke des Wäschestücks 10 handeln. Diese geeignete Stelle wird durch eine Bildauswertung der erfassten Topografie bzw. des erfassten Oberflächenprofils des Wäschestücks 10 durch beispielsweise einen Computer errechnet. Dies kann derart geschehen, dass von jeweils zwei benachbarten Punkten der Winkel zwischen zwei Tangenten bzw. der tangentialen Ebene dieser Punkte ermittelt wird. Ist dieser Winkel spitz oder schneiden sich die Tangenten nicht, ist von einer großen Krümmung oder einem großen Krümmungsgradienten auszugehen. Eine solche Stelle eignet sich dann besonders gut zum Erfassen und/oder Vereinzeln des Wäschestücks 10.

Von der automatisch durch Bildauswertung rechnerisch ermittelten bevorzugten Stelle des Wäschestücks 10 werden die Koordinaten ebenfalls automatisch errechnet und an den Antrieb, vorzugsweise die schnelle Servoachse der Klammer 17 übertragen, sodass die Klammer 17 des Greifers genau an die errechnete, bevorzugte Stelle des Wäschestücks 10 gefahren werden kann. Werden mehrere Stellen des Wäschestücks 10 als zum Ergreifen geeignet ermittelt, wird diejenige Stelle ausgewählt, an die der Greifer 14 am schnellsten, insbesondere mit dem kürzesten Verfahrweg, heranfahrbar ist.

Im gezeigten Ausführungsbeispiel handelt es sich bei der aus dem durch die mindestens eine Kamera 14 aufgenommenen Bild abgeleiteten Stelle um eine beliebige Stelle des Wäschestücks 10. Es ist auch denkbar, dass die Auswertung des aufgenommenen Bildes, insbesondere des dreidimensionalen Bildes, dahingehend erfolgt wird, dass die Ermittlung einer Ecke des Wäschestücks 10 erfolgt und diese Ecke von der Klammer 17 der Greifeinrichtung 15 gezielt ergriffen wird.

Nachdem gemäß dem gezeigten Ausführungsbeispiel die Klammer 17 der Greifeinrichtung 15 das Wäschestück 10 an einer besonders gut zu greifenden, beliebigen Stelle ergriffen hat, wird es durch ein Verfahren der Klammer 17 längs der Schiene 16 von der Aufnahmestelle 12 wegbewegt und etwas angehoben. Am oberen Ende der Schiene 16 wird das Wäschestück 10 von mindestens einer Kamera 22 abgebildet, und zwar vorzugsweise wiederum als dreidimensionales Bild. Durch entsprechende Auswertung des von diesem Bild wiedergegebenen Oberflächenprofils des Wäschestücks 10 wird eine Ecke 23 des noch an der Klammer 17 hängenden Wäschestücks 10 aus dem von der mindestens einen Kamera 22 ermittelten Oberflächenprofil bzw. Topografie des Wäschestücks 10 ermittelt und von einer Klammer 20 der Transporteinrichtung 18 ergriffen. Die Klammer 17 der Greifeinrichtung 15 wird anschließend geöffnet, so dass das Wäschestück 10 mit der Ecke 23 von der Klammer 20 herunterhängt.

Durch Verfahren der Klammer 20 mit dem herunterhängenden Wäschestück 10 längs der Schiene 19 der Transporteinrichtung 18 gelangt das Wäschestück 10 von der Übergabestelle 21 zwischen der Greifeinrichtung 15 und der Transporteinrichtung 18 zur Umorientierungsstelle 25. Hier wird die am weitesten von der Klammer 20 herunterhängende, tiefste Stelle des Wäschestücks 10 von der Streckklammer 26 erfasst. Weil die tiefste Stelle des Wäschestücks 10 eine der Ecke 23 diagonal gegenüberliegende Ecke 28 ist, erfasst die Streckklammer 26 zwangsläufig die der oberen Ecke 23 diagonal gegenüberliegende Ecke 28 des Wäschestücks 10. Nun wird durch Verfahren der Streckklammer 26 auf der Bahn 27 in Zuführrichtung 29 das Wäschestück 10 zwischen den diagonal gegenüberliegenden Ecken 23 und 28 gestreckt, vorzugsweise nur leicht gestreckt, und dabei die Ecken 23 und 28 auseinandergezogen. Vorzugsweise werden die Ecken 23 und 28 soweit auseinandergezogen, dass das Wäschestück zwischen diesen Ecken 23 und 28 nur geringfügig stramm gezogen wird, aber keinen nennenswerten mechanischen Belastungen ausgesetzt wird. Beim Auseinanderziehen der diagonal gegenüberliegenden Ecken 23 und 28 durch Verfahren der Streckklammer 26 bildet sich zwischen diesen Ecken 23 und 28 die Diagonalfalte 30 im Wäschestück 10 aus. Gleichzeitig kommt es dabei zu einer Ausbildung der übrigen Ecken 31 und 32 des Wäschestücks 10, und zwar derart, dass diese von der Umorientierungsstelle 25 zugeordneten Kameras 22 eindeutig erfassbar und abbildbar sind.

Durch eine Auswertung des von den Kameras 22 und oder gegebenenfalls nur einer Kamera 22 aufgenommenen Bildes des gestreckt gehaltenen Wäschestücks 10 sind die Positionen der Ecken 31 und 32 rechnerisch ermittelbar. Von den so ermittelten Ecken 31 und 32 wird entweder eine solche Ecke 31 bzw. 32 ergriffen, die am leichtesten ergreifbar ist oder eine solche Ecke 31 bzw. 32, die bei einem rechteckigen Wäschestück 10 zusammen mit der von der Streckklammer 26 gehaltenen Ecke 28 die gewünschte vordere Kante 13 des Wäschestücks 10, nämlich entweder eine Querkante oder eine Längskante, begrenzt.

Wie im in der Fig. 1 gezeigten Ausführungsbeispiel wird von der Klammer 34 die der Ecke 28 benachbarte Ecke 32 ergriffen, die zu einer Querkante des Wäschestücks 10 gehört. In diesem Falle wird das Wäschestück 10 mit der kürzeren Querkante als vorauseilende vordere Kante 13 der Eingabemaschine zugeführt und auf den Zuführförderer derselben abgelegt. Wenn das Wäschestück 10 mit der längeren Längskante als vorauseilende vordere Kante der Eingabemaschine zugeführt werden soll, wird von der Klammer 34 die andere beim Ausstrecken des Wäschestücks 10 sich ausbildende Ecke 31 ergriffen.

Die Klammern 33 und 34 des Klammerpaars sind entlang einer vorzugsweise gradlinigen Förderstrecke 38 gezielt an die Ecken 28 und 32 heranfahrbar, wobei das Heranfahren der Klammer 32 an die beim Strecken des Wäschestücks frei kommende oder sich ausbildende Ecke 32 gesteuert wird anhand einer rechnerischen Auswertung des durch mindestens eine Kamera 22 an der Umorientierungsstelle 25 aufgenommenen dreidimensionalen Bildes des Wäschestücks.

Im gezeigten Ausführungsbeispiel ist über den Klammern 33 und 34 ein zweites Klammerpaar mit Klammern 35 und 36 vorgesehen. Die Klammern 35 und 36 übernehmen die vordere Kante 13 an ihren Ecken 28 und 32 aus den Klammern 33 und 34. Das danach mit den Ecken 32 und 28 unter den Klammern 35, 36 hängende Wäschestück 10 wird nun längs der Förderstrecke 37 in Zuführrichtung 29 zur Eingabemaschine transportiert und dabei vorzugsweise entweder direkt auf den Zuführförderer der Eingabemaschine abgelegt oder in Spreizklammern der Eingabemaschine übergeben.

An der Umorientierungsstelle 25 wird durch die mindestens eine Kamera 22 bei einem gesäumten Wäschestück 10 auch ermittelt, auf welcher Seite des Wäschestücks die den Saum bildenden schmalen Randstreifen des Wäschestücks 10 liegen. Vor allem bei Tischwäsche muss die Saumseite des Wäschestücks 10, das heißt, die Seite, auf der der umgeschlagene schmale Randstreifen des Wäschestücks 10 sich befindet, so in eine Mangel eingegeben werden, dass die Saumseite mit der Mangelwalze in Kontakt kommt, aber nicht mit der Plättfläche der stillstehenden Mangelmulde. Weil durch die mindestens eine Kamera 22 ermitteltbar ist, auf welcher der von den Kameras 22 betrachteten Seiten des Wäschestücks 10 sich der Saum befindet, kann das Wäschestück 10 durch wahlweises Zuführen zur Eingabemaschine mit an den Klammern 33, 34 oder 35, 36 hängenden Ecken 28 und 32 in der zum Mangeln richtigen Orientierung der Eingabemaschine zugeführt werden.

Wenn an der Umorientierungsstelle 25 nur ein Klammerpaar mit Klammern 33, 34 oder Klammern 35, 36 vorgesehen ist, kann die Umorientierung des Wäschestücks 10 anhand der von mindestens einer Kamera 22 aufgenommenen Saumlage auch durch ein Ändern der Reihenfolge der Klammern 35, 36 bzw. 33, 34 erfolgen, indem beispielsweise längs der Förderstrecke 37 oder 38 die eine Klammer die andere überholt.

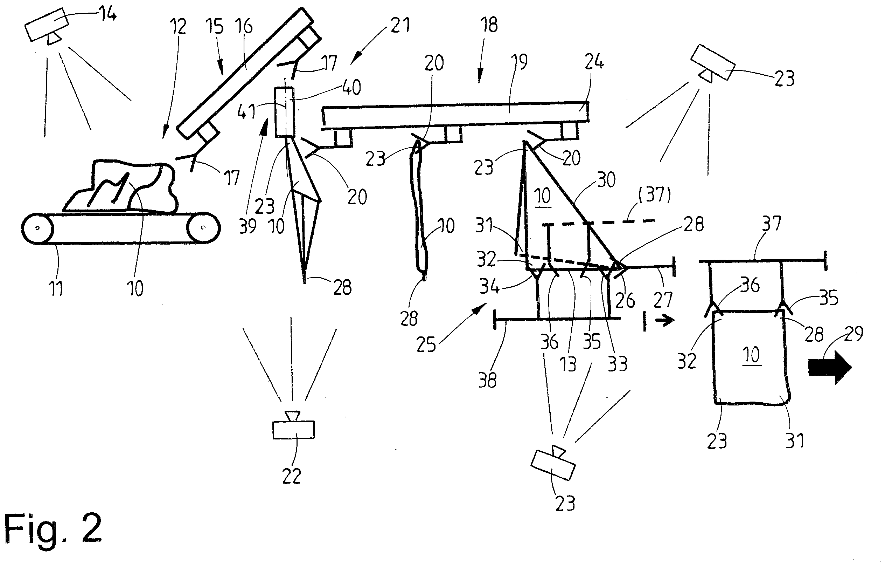

Die Fig. 2 zeigt eine Vorrichtung die prinzipiell der zuvor beschriebenen Vorrichtung entspricht, wobei für gleiche Teile gleiche Bezugsziffern verwendet werden. Bei der Vorrichtung der Fig. 2 ist an der Übergabestelle 21 ein Rollenpaar 39 vorgesehen. Das Rollenpaar 39 verfügt über zwei nebeneinanderliegende, aufrechte Rollen 40, von denen in der Fig. 2 nur die vorn liegende Rolle 40 gezeigt ist. Die beiden gleichen Rollen 40 sind um parallele, vertikale Drehachsen 41 drehbar. Zwischen den Rollen 40 ist ein schmaler Spalt gebildet zum Hindurchtritt mindestens eines Teils des Wäschestücks 10.

Im gezeigten Ausführungsbeispiel sind die parallelen aufrechten Rollen 40 gegensinnig antreibbar, und zwar so, dass sie das Wäschestück 10 oder nur einen Teil desselben durch den Spalt zwischen benachbarten Rollen transportierten. Es ist auch denkbar, nur eine der beiden parallelen Rollen 40 anzutreiben, sodass die zweite Rolle 40 freidrehend mitläuft, wenn zwischen den Rollen 40 ein Wäschestück 10 hindurchtransportiert wird.

Das Wäschestück 10 wird durch Öffnen der Klammer 17 oberhalb der Rollen 40 abgeworfen, wodurch es infolge der aufrechten Anordnung der Rollen 40 des Wäschestücks 10 in den Spalt zwischen den Rollen 40 gelangt und quer durch den Spalt hindurchtransportiert wird. Sobald das Wäschestück 10 nahezu durch den Spalt zwischen den Rollen 40 hindurchtransportiert ist und nur noch mit einem hinteren Zipfel oder einer hinteren Ecke, vorzugsweise der Ecke 28, im Spalt hängt, wird dies durch ein entsprechendes Detektionsmittel ermittelt und dementsprechend die Klammer 20 der Transporteinrichtung 18 so gesteuert, dass sie das Wäschestück 10 am hinteren Zipfel oder der hinteren Ecke ergreift, und zwar entweder wenn dieses noch mit der äußersten Ecke oder dem äußersten Zipfel sich gerade noch im Spalt zwischen den Rollen 40 befindet oder unmittelbar nachdem der hinterste Zipfel oder die hinterste Ecke des Wäschestücks 10 den Spalt zwischen den Rollen 40 verlassen hat.

Es ist denkbar, die Drehachsen 41 der beiden benachbarten Rollen 40 leicht gegensinnig schräg anzuordnen, und zwar so, dass ein sich nach unten hin verjüngender und leicht V-förmiger Spalt zwischen den Rollen 40 entsteht.

Es ist auch denkbar, dass der Spalt zwischen den Rollen 40 unten geschlossen ist durch einen Querbalken unter den Rollen 40 oder eine quergerichtete, horizontale Rolle vor oder hinter den beiden parallelen Rollen 40.

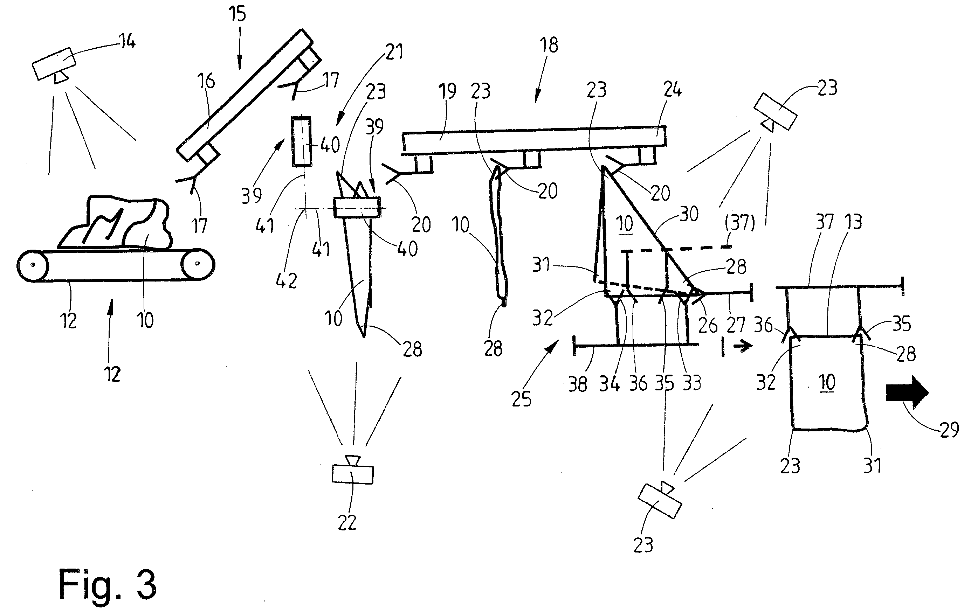

Die Fig. 3 zeigt eine Abwandlung der in der Fig. 2 dargestellten Vorrichtung. Bei dieser Abwandlung ist das Paar benachbarter Rollen 40 verschwenkbar. Konkret sind die Rollen 40 um ihre Drehachsen 41 gemeinsam verschwenkbar von einer Ausgangsposition mit senkrechten Drehachsen 41 in eine Position mit etwa horizontal verlaufenden Drehachsen 41. Die Verschwenkung der Rollen 40 erfolgt um eine horizontale Schwenkachse 42, die durch die Drehachsen 41 beider Rollen 40 verläuft und sich mit Abstand unterhalb der Rollen 40 befindet. Im gezeigten Ausführungsbeispiel sind die Rollen 40 gleichermaßen um etwa 90° verschwenkbar.

In der hochgeschwenkten Ausgangsposition der Rollen 40 verlaufen die Drehachsen 41 senkrecht, können aber auch leicht schräg zur Senkrechten verlaufen. In dieser Ausgangsstellung der Rollen 40 wird von der Klammer 17 ein Wäschestück 10 über den Rollen 40 abgeworfen. Dadurch gelangt das Wäschestück 10 in den Spalt zwischen den senkrecht oder annähernd senkrecht ausgerichteten Rollen 40. Es werden anschließend die Rollen 40 gleichermaßen gemeinsam um ihre horizontalen Schwenkachsen 42 um etwa 90° verschwenkt, so dass die Rollen 40 in eine horizontale oder annähernd horizontale Lage gelangen. In dieser horizontalen Lage werden die Rollen 40 solange gegensinnig angetrieben, bis ein hinterster - aufgrund des Verschwenkens der Rollen 40 in die Horizontale - oberer Zipfel oder eine Ecke 23 sich noch soeben zwischen den Rollen 40 befindet, also ein Großteil des Wäschestücks durch die Rollen 40 hindurchtransportiert worden ist. Gegebenenfalls kann dann der Antrieb der Rollen 40 gestoppt werden. Dadurch befindet sich die Ecke 23 des Wäschestücks 10 gezielt oberhalb der Rollen 40, indem die Ecke 23 etwas nach oben aus dem Spalt zwischen den Rollen 40 herausragt. An dieser Ecke 23 kann die Klammer 20 der Transporteinrichtung 18 dann zuverlässig das Wäschestück 10 ergreifen und abtransportieren. Dabei kann das Wäschestück 10 aus dem Spalt zwischen den Rollen 40 herausgezogen werden. Es ist auch denkbar, das Wäschestück durch Öffnen des Spalts zwischen den Rollen 40 freizugeben oder durch gegensinnigen Antrieb der Rollen 40 das Wäschestück 10 aus dem Spalt herauszubewegen. Dies kann auch derart geschehen, dass nach dem Ergreifen der Ecke 23 des Wäschestücks 10 von der Klammer 20 die Rollen 40 in entgegengesetzter Richtung drehend angetrieben werden.

Nachdem das Wäschestück 10 mittels der Transporteinrichtung 18 von den beiden parallelen Rollen 40 abtransportiert ist und dadurch die Rollen 40 wieder frei sind, werden sie zurückgeschwenkt in die vertikale Ausgangsposition zur Übernahme eines nächsten Wäschestücks 10.

Die automatische Eckenfindung mit dem zuvor beschriebenen Paar paralleler Rollen 40 kann auch an beliebigen anderen Stellen der in den Fig. 1 bis 3 beispielhaft dargestellten und beschriebenen Vorrichtungen vorgesehen sein. Denkbar ist es auch, die automatische Eckenfindung zwischen zwei parallelen Rollen 40 woanders im Wäschereibereich einzusetzen als es in den Fig. 1 bis 3 dargestellt ist.

**Bezugszeichenliste:**

| | | | |
|---|---|---|---|
| 10 | Wäschestück | 36 | Klammer |
| 11 | Förderer | 37 | Förderstrecke |
| 12 | Aufnahmestelle | 38 | Förderstrecke |
| 13 | vordere Kante | 39 | Rollenpaar |
| 14 | Kamera | 40 | Rolle |
| 15 | Greifeinrichtung | 41 | Drehachse |
| 16 | Schiene | 42 | Schwenkachse |
| 17 | Klammer | | |
| 18 | Transporteinrichtung | | |
| 19 | Schiene | | |
| 20 | Klammer | | |
| 21 | Übergabestelle | | |
| 22 | Kamera | | |
| 23 | Ecke | | |
| 24 | Ende | | |
| 25 | Umorientierungsstelle | | |
| 26 | Streckklammer | | |
| 27 | Bahn | | |
| 28 | Ecke | | |
| 29 | Zuführrichtung | | |
| 30 | Diagonalfalte | | |
| 31 | Ecke | | |
| 32 | Ecke | | |
| 33 | Klammer | | |
| 34 | Klammer | | |
| 35 | Klammer | | |

## Patentansprüche

1. Verfahren zum Zuführen von Wäschestücken (10) zu einer Mangel oder einer sonstigen Wäschebehandlungseinrichtung, wobei ein Wäschestück (10) ergriffen, dieses Wäschestück (10) an zwei benachbarten Ecken (28, 32) einer vorderen Kante (13) ausgebreitet und mit dieser vorderen Kante (13) auf einem Zuführförderer abgelegt wird, der das Wäschestück (10) zur Mangel oder einer sonstigen Wäschebehandlungseinrichtung transportiert, wobei ein Oberflächenprofil des Wäschestücks (10) oder mehrerer Wäschestücke (10) aufgenommen, daraus eine gewünschte oder leicht zu ergreifende Stelle des Wäschestücks (10) ermittelt und dann das Wäschestück (10) an dieser Stelle ergriffen wird, **dadurch gekennzeichnet, dass** das Oberflächenprofil des Wäschestücks (10) oder der Wäschestücke (10) durch bildgebende Maßnahmen ermittelt wird und wobei eine beliebige Stelle des Wäschestücks (10) dort ergriffen wird, wo gemäß dem ermittelten Oberflächenprofil das Wäschestück (10) den größten Krümmungsgradienten aufweist.

2. Verfahren nach Anspruch 1, **dadurch gekennzeichnet, dass** das Oberflächenprofil des Wäschestücks (10) oder der Wäschestücke (10) durch dreidimensionale bildgebende Maßnahmen, beispielsweise durch mindestens eine 3D-Kamera oder einen Laserscanner, ermittelt wird.

3. Verfahren nach einem der vorhergehenden Ansprüche, **dadurch gekennzeichnet, dass** das Wäschestück (10) an einer solchen Ecke (23, 28, 31, 32) ergriffen wird, die aufgrund einer Auswertung des ermittelten Oberflächenprofils zum Ergreifen am besten geeignet und/oder am einfachsten zugänglich ist.

4. Verfahren nach einem der vorhergehenden Ansprüche, **dadurch gekennzeichnet, dass** das Oberflächenprofil eines an einer beliebigen Stelle an einem Haltemittel hängenden Wäschestücks (10) ermittelt und anhand des ermittelten Oberflächenprofils eine Ecke (23, 28, 31, 32) des Wäschestücks (10) gezielt ergriffen wird.

5. Verfahren nach einem der vorhergehenden Ansprüche, **dadurch gekennzeichnet, dass** anhand des ermittelten Oberflächenprofils des Wäschestücks (10) die Orientierung eines Saums des Wäschestücks (10) ermittelt wird und anhand der ermittelten Orientierung des Saums das Wäschestück (10) in einer der gewünschten Lage des Saums entsprechenden Ausrichtung der Wäschebehandlungseinrichtung, insbesondere einer Mangel, zugeführt wird.

6. Verfahren nach einem der vorhergehenden Ansprüche, **dadurch gekennzeichnet, dass** bei von einer gehaltenen Ecke (23) herunterhängendem Wäschestück (10) eine tiefste Ecke (28) dieses Wäschestücks (10) ergriffen und gestreckt wird, wodurch die übrigen Ecken (31, 32) des Wäschestücks sich derart ausbilden, dass sie greiffähige Positionen einnehmen.

7. Verfahren nach Anspruch 6, **dadurch gekennzeichnet, dass** das Wäschestück (10) an diagonal gegenüberliegenden Ecken (23, 28) gestreckt und/oder ausgebreitet wird und von den sich dabei ausbildenden übrigen Ecken (31, 32) eine zu den gehaltenen Ecken (23, 28) benachbarte Ecke (31, 32) gesucht wird.

8. Verfahren nach Anspruch 6 oder 7, **dadurch gekennzeichnet, dass** bei an den diagonal gegenüberliegenden Ecken (23, 28) gehaltenem Wäschestück (10) eine der sich beim Strecken bzw. Ausbreiten ausbildende Ecke (31, 32) ergriffen und eine der zum Ausbreiten bzw. Strecken gehaltenen Ecke (23) losgelassen wird, wobei vorzugsweise eine solche sich beim Ausbreiten bzw. Strecken ausbildende Ecke (31, 32) ergriffen wird, die zu der gewünschten vorderen Kante (13) des Wäschestücks (10) gehört.

9. Verfahren nach einem der Ansprüche 6 bis 8, **dadurch gekennzeichnet, dass** die Positionen der sich beim Ausbreiten bzw. Strecken des Wäschestücks (10) ausbildenden freien Ecken (31, 32) durch Ermittlung des Oberflächenprofils und/oder ein bildgebendes Verfahren ermittelt werden, vorzugsweise die Koordinaten dieser Ecken (31, 32) ermittelt werden.

## Claims

1. A method for feeding items (10) of laundry to a mangle or to some other laundry-treatment arrangement, wherein an item (10) of laundry is gripped, said item (10) of laundry is spread out at two adjacent corners (28, 32) of a front edge (13) and deposited with said front edge (13) on a feed conveyor which transports the item (10) of laundry to the mangle or to some other laundry-treatment arrangement, wherein a surface profile of the item (10) of laundry or of a plurality of items (10) of laundry is recorded, from which an intended or easily gripped location on the item (10) of laundry is determined and the item (10) of laundry is then gripped at this location, **characterized in that** the surface profile of the item (10) of laundry or of the items (10) of laundry is determined by imaging processes and wherein an arbitrary location on the item (10) of laundry is gripped where, in accordance with the determined surface profile, the item (10) of laundry exhibits the greatest curvature gradient.

2. The method as claimed in Claim 1, **characterized in that** the surface profile of the item (10) of laundry or of the items (10) of laundry is determined by three-dimensional imaging processes, for example by means of at least one 3D camera or a laser scanner.

3. The method as claimed in one of the preceding Claims, **characterized in that** the item (10) of laundry is gripped at such a corner (23, 28, 31, 32) which, on the basis of an analysis of the determined surface profile, is most suitable for gripping and/or easiest to access.

4. The method as claimed in one of the preceding Claims, **characterized in that** the surface profile of an item (10) of laundry hanging on a retaining means at an arbitrary position is determined and, on the basis of the determined surface profile, a corner (23, 28, 31, 32) of the item (10) of laundry is gripped in a targeted manner.

5. The method as claimed in one of the preceding Claims, **characterized in that,** on the basis of the determined surface profile of the item (10) of laundry, the orientation of a hem of the item (10) of laundry is ascertained and, on the basis of the determined orientation of the hem, the item (10) of laundry is fed to the laundry-treatment arrangement, in particular a mangle, in an alignment corresponding to the intended position of the hem.

6. The method as claimed in one of the preceding Claims, **characterized in that,** in the case of an item (10) of laundry hanging down from a held corner (23), a lowest corner (28) of said item (10) of laundry is gripped and stretched, whereby the other corners (31, 32) of the item of laundry are formed such that they assume positions that can be gripped.

7. The method as claimed in Claim 6, **characterized in that** the item (10) of laundry is stretched and/or spread out at diagonally opposite corners (23, 28) and of the remaining corners (31, 32) thus formed, a search is made for a corner (31, 32) adjacent to the held corners (23, 28).

8. The method as claimed in Claim 6 or 7, **characterized in that,** in the case of the item (10) of laundry being held at the diagonally opposite corners (23, 28), a corner (31, 32) formed during the stretching or spreading-out process is gripped and a corner (23) held for the purpose of stretching or spreading out is released, wherein preferably such a corner (31, 32) formed during the stretching or spreading-out process is gripped which is part of the intended front edge (13) of the item (10) of laundry.

9. The method as claimed in one of the Claims 6 to 8, **characterized in that** the positions of the free corners (31, 32) formed during the stretching or spreading-out of the item (10) of laundry are determined by the determination of the surface profile and/or by an imaging method, preferably the coordinates of these corners are determined.

## Revendications

1. Procédé d'amenée de pièces de linge (10) à une calandre ou à un autre appareil de traitement de linge, une pièce de linge (10) étant saisie, cette pièce de linge (10) étant étalée au niveau de deux coins voisins (28, 32) d'un bord avant (13) et étant déposée avec ce bord avant (13) sur un convoyeur d'amenée, qui transporte la pièce de linge (10) vers la calandre ou vers un autre appareil de traitement de linge, un profil de surface de la pièce de linge (10) ou de plusieurs pièces de linge (10) étant enregistré, un emplacement souhaité ou facile à saisir de la pièce de linge (10) étant déterminé à partir de celui-ci et la pièce de linge (10) étant ensuite saisie à cet emplacement, **caractérisé en ce que** le profil de surface de la pièce de linge (10) ou des pièces de linge (10) est déterminé par des mesures d'imagerie et dans lequel un emplacement quelconque de la pièce de linge (10) est saisi à l'endroit où, selon le profil de surface déterminé, la pièce de linge (10) présente le plus grand gradient de courbure.

2. Procédé selon la revendication 1, **caractérisé en ce que** le profil de surface de la pièce de linge (10) ou des pièces de linge (10) est déterminé par des mesures d'imagerie tridimensionnelles, par exemple par au moins une caméra 3D ou un scanner laser.

3. Procédé selon l'une quelconque des revendications précédentes, **caractérisé en ce que** la pièce de linge (10) est saisie au niveau d'un coin (23, 28, 31, 32) qui, sur la base d'une évaluation du profil de surface déterminé, est le mieux approprié et/ou le plus facile d'accès pour la saisie.

4. Procédé selon l'une quelconque des revendications précédentes, **caractérisé en ce que** le profil de surface d'une pièce de linge (10) suspendue à un moyen de maintien à un emplacement quelconque est déterminé et un coin (23, 28, 31, 32) de la pièce de linge (10) est saisi de manière ciblée à l'aide du profil de surface déterminé.

5. Procédé selon l'une quelconque des revendications précédentes, **caractérisé en ce qu'**à l'aide du profil de surface déterminé de la pièce de linge (10), l'orientation d'un ourlet de la pièce de linge (10) est déterminée et, à l'aide de l'orientation déterminée de l'ourlet, la pièce de linge (10) est amenée à l'appareil de traitement de linge, notamment à une calandre, dans une direction correspondant à la position souhaitée de l'ourlet.

6. Procédé selon l'une quelconque des revendications précédentes, **caractérisé en ce que,** lorsqu'une pièce de linge (10) est suspendue par un coin (23) maintenu, un coin le plus bas (28) de cette pièce de linge (10) est saisi et étiré, les autres coins (31, 32) de la pièce de linge se formant ainsi de telle sorte qu'ils prennent des positions aptes à la préhension.

7. Procédé selon la revendication 6, **caractérisé en ce que** la pièce de linge (10) est étirée et/ou étalée au niveau de coins diagonalement opposés (23, 28) et, parmi les autres coins (31, 32) qui se forment alors, un coin (31, 32) voisin des coins maintenus (23, 28) est recherché.

8. Procédé selon la revendication 6 ou 7, **caractérisé en ce que,** lorsqu'une pièce de linge (10) est maintenue au niveau des coins diagonalement opposés (23, 28), l'un des coins (31, 32) qui se forment lors de l'étirement ou de l'étalement est saisi et l'un des coins (23) qui sont maintenus pour l'étalement ou l'étirement est lâché, un coin (31, 32) qui se forme lors de l'étalement ou de l'étirement qui fait partie du bord avant souhaité (13) de la pièce de linge (10) étant de préférence saisi.

9. Procédé selon l'une quelconque des revendications 6 à 8, **caractérisé en ce que** les positions des coins libres (31, 32) qui se forment lors de l'étalement ou de l'étirement de la pièce de linge (10) sont déterminées par détermination du profil de surface et/ou par un procédé d'imagerie, de préférence les coordonnées de ces coins (31, 32) sont déterminées.
